# EUROPEAN PATENT APPLICATION

(11) **EP 2 065 253 A2**
(43) Date of publication of application: **03.06.2009**
(21) Application number: 08169778.1
(22) Date of filing: 24.11.2008
(51) Int. Cl.: B60Q 1/08, B60Q 1/14

(54) **Headlamp light distribution control device**

(30) Priority: 29.11.2007 JP 2007308936
(71) Applicant: Omron Corporation, Kyoto-shi, Kyoto 600-8530 (JP)
(72) Inventor: Ishii, Hirotaka, Shiokoji-dori Shimogyo-ku Kyoto-shi Kyoto 600-8530 (JP); Sato Kazuhiko, Shiokoji-dori Shimogyo-ku Kyoto-shi Kyoto 600-8530 (JP)
(74) Representative: Wilhelms · Kilian & Partner Patentanwälte

(57) **Abstract**

A headlamp light distribution control device 1 includes imaging means 2 for imaging an image of a front side of an own vehicle 16, identification means 7 for identifying a taillight of a leading vehicle 20, a headlamp of an oncoming vehicle 21 at a front of the own vehicle 16, or a streetlamp 22 to 29 based on an output image of the imaging means 2, and control means 7 for controlling light distribution property and light quantity of a headlamp 9 of the own vehicle 16 according to an identification result of the identification means 7.

## Description

### [Technical Field]

The present invention relates to a headlamp light distribution control device used in vehicles such as an automobile.

### [Background Art]

A main role of a headlamp, that is, a headlight of a vehicle such as an automobile (hereinafter referred to as vehicle) is to brightly light up a front of an own vehicle to find obstacles such as a leading vehicle at an early stage at night or early dark, or under a low illuminance environment such as in a tunnel, where high light quantity and long distance light distribution property is desired as much as possible to achieve such role, but low light quantity and close distance light distribution property is also desired from a standpoint of preventing dazzling on oncoming vehicles and the like. The former light distribution property is generally referred to as a high beam, and the latter light distribution property is referred to as a low beam, where the beams are switched by an intended operation (manual operation) of a driver.

The intended operation by the driver sometimes causes inappropriate beam selection. This includes a case where the driver forgets to switch to the low beam although an oncoming vehicle is present. A technique of automating light distribution control of the headlamp to avoid such drawback is known.

For instance, Patent Document 1 described below discloses a technique (hereinafter referred to as related art) of photographing an image of the front side of the own vehicle with a camera, determining a presence of "oncoming vehicle" or "leading vehicle", or "overtaking vehicle" based on the image, and controlling an illuminance and an irradiation distance of the headlamp according to the determination result.

[Patent Document 1] Japanese Unexamined Patent Publication No. 2005-170063

### [Disclosure of the Invention]

### [Problems to be Solved by the Invention]

Although the related art is advantageous in preventing dazzling on other vehicles, that is, an "oncoming vehicle" or a "leading vehicle", or an "overtaking vehicle", consideration tends to lack on pedestrians, and thus still has room for improvement.

Specifically, assume an own vehicle is traveling on a bright road with street lamps. Such road is generally assumed as a road having a high possibility a pedestrian is present such as streets in urban district and a main road. When traveling on the road with street lamps, the headlamp is in high illuminance and long distance light distribution property (i.e., high beam) in the related art if the oncoming vehicle or the leading vehicle, or the overtaking vehicle is not present. However, since the road with street lamps is a road having a high possibility the pedestrian is present, the pedestrians may be subjected to dazzling by the high beam.

It is an object of the present invention to provide a headlamp light distribution control device capable of preventing dazzling on other vehicles and preventing dazzling on pedestrians while ensuring a view of the own vehicle.

### [Means for Solving the Problems]

In accordance with one aspect of the present invention, a headlamp light distribution control device includes imaging means for imaging an image of a front side of an own vehicle; identification means for identifying a taillight of a leading vehicle, a headlamp of an oncoming vehicle at a front of the own vehicle, or a streetlamp based on an output image of the imaging means; and control means for controlling light distribution property and light quantity of a headlamp of the own vehicle according to an identification result of the identification means.
Preferably, the imaging means images a color image of a front side of the own vehicle; and the identification means identifies the taillight of the leading vehicle, the headlamp of the oncoming vehicle, or the streetlamp from color information of an illumination light included in the color image.

### [Effect of the Invention]

The present invention can prevent dazzling on the leading vehicle and the oncoming vehicle (other vehicle) since the light distribution property and the light quantity of the headlamp of the own vehicle can be controlled by identifying the leading vehicle or the oncoming vehicle in front of the own vehicle, and in addition, prevent dazzling on the pedestrians since the light distribution property and the light quantity of the headlamp of the own vehicle can be controlled by identifying the streetlamps.

### [Brief Description of the Drawings]

FIG. 1 shows an overall configuration view of a headlamp light distribution control device according to an embodiment.
FIG. 2 shows a structural view of an imaging device 10 used in an imaging unit 2.
FIGS. 3A and 3B are views each showing a color filter 12.
FIG. 4 shows a configuration view of an actual color filter.
FIG. 5 is a view showing positions of each headlamp (L1 to L8) in a vehicle.
Fig. 6 shows a schematic flow of main parts of a control program executed in a control unit 7.
FIG. 7 is a view showing a control mode of a headlamp light distribution control process.
FIG. 8 shows a headlamp light distribution state diagram when an oncoming vehicle and a leading vehicle are not present.
FIG. 9 shows a headlamp light distribution state diagram when a distant leading vehicle is present.
FIG. 10 shows a headlamp light distribution state diagram when a close leading vehicle is present.
FIG. 11 shows a headlamp light distribution state diagram when an oncoming vehicle is present.
FIG. 12 shows a headlamp light distribution state diagram when streetlamps are present.
FIGS. 13A to13C are views each showing an output image of the imaging unit 2.
FIG. 14 is a view showing a flow for identifying a taillight and a headlight.
FIG. 15 is a view showing a flow for identifying a streetlamp.
Fig. 16 is a view showing a flow of a specific example of an identification judgment of illumination light.
FIG. 17 shows an identification conceptual view of a red lamp such as a taillight of a leading vehicle.
FIG. 18 shows an identification conceptual view of an HID bulb and a sodium lamp.
Fig. 19 shows an identification conceptual view of a white LED.
FIG. 20 shows an identification conceptual view of a fluorescent lamp and a halogen lamp.

### [Best Mode for Carrying out the Invention]

An embodiment of the present invention will be described based on the drawings.

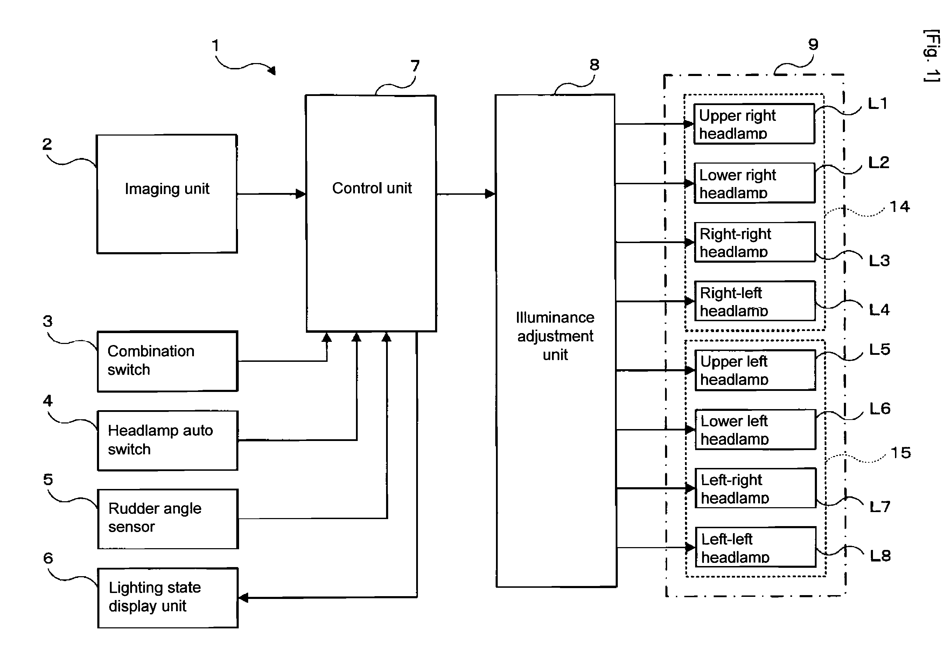

FIG. 1 shows an overall configuration view of a headlamp light distribution control device according to the embodiment. In the figure, a headlamp light distribution control device 1 includes an imaging unit 2, a combination switch 3, a headlamp auto switch 4, a rudder angle sensor 5, a lighting state display unit 6, a control unit 7, an illuminance adjustment unit 8, and a headlamp unit 9.

Describing each unit in detail, the imaging unit 2 is an imaging device such as HDRC (High Dynamic range CMOS) capable of periodically imaging an image of a front side of an own vehicle, in particular, outputting high dynamic range and color image.

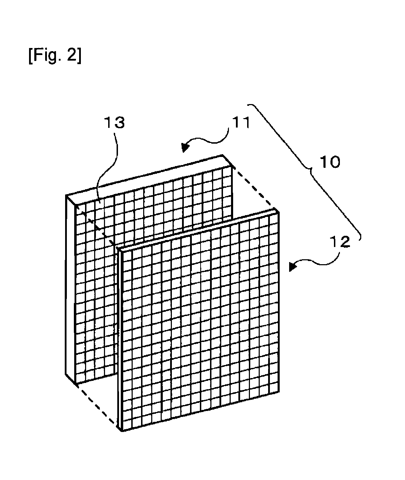

FIG. 2 shows a structural view of an imaging device 10 used in the imaging unit 2. In the figure, the imaging device 10 includes an imaging element (CMOS herein) 11, and a color filter 12 stacked on a light receiving surface of the imaging element 11. The grid of the CMOS 11 is a pixel each including one photoelectric conversion element 13. Each pixel corresponds to the grid of the color filter 12 at one to one. The grid of the color filter 12 each has a specific color, and various types are used depending on a manner of choosing the color and a manner of arrangement.

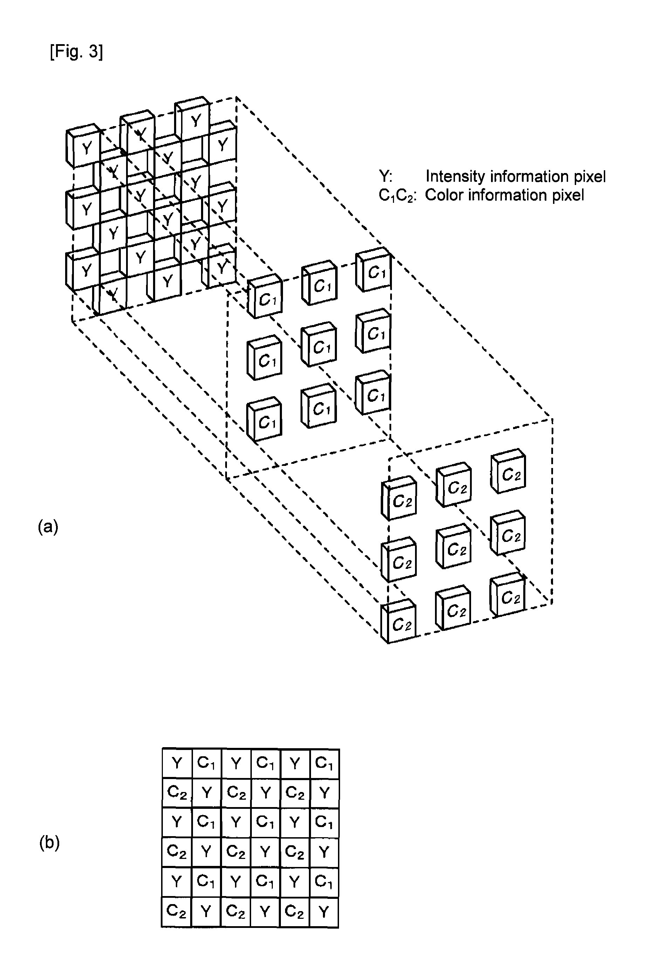

FIG. 3 is a view showing the color filter 12, and specifically, a fundamental structural view of the color filter referred to as Bayer type (or checkered type) contrived by B. E. Bayer. This type is a widely used type since an S/N balance of a color signal and an intensity signal is satisfactory, and a satisfactory color reproducibility is obtained without depending on a brightness of a subject. In the figure, Y is a filter for obtaining intensity information, and C1 and C2 are filters for obtaining color information. The Y filter is arranged in a checkered pattern, the C1 filter is arranged in a gap of odd number lines, and the C2 filter is arranged in a gap of even number lines. The Y filter is arranged in a greater number because the intensity information tends to perceive resolution of the image and sharpness of a contour than the color information in viewing of humans.

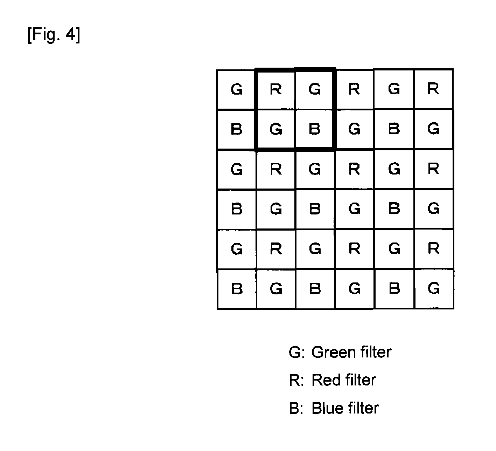

FIG. 4 shows a configuration view of an actual color filter, where R is a red filter, G is a green filter, and B is a blue filter. An array of each color is regularly repeated at a ratio of "R:G:B = 1:2:1", as shown with a heavy line box in the figure. The red (R), the green (G), and the blue (B) are three primary colors of light, where the G filter is also used as the filter for obtaining the intensity information since the green particularly expresses the brightness of the subject. That is, the G filter corresponds to the Y filter of FIG. 3, and the R filter and the B filter correspond to the C1, C2 filters of FIG. 3.

The headlamp unit 9 has a configuration enabling a multi-stage light distribution, that is, a multi-stage light distribution beyond the two-stage light distribution (low beam and high beam) described in the RELATED ART at the beginning.

Specifically, as shown in FIG. 1, the headlamp unit 9 includes a right headlamp part 14 and a left headlamp part 15, where the right headlamp part 14 is configured by an upper right headlamp (hereinafter referred to as L1), a lower right headlamp (hereinafter referred to as L2), a right-right headlamp (hereinafter referred to as L3), and a right-left headlamp (hereinafter referred to as L4), and the left headlamp part 15 is configured by an upper left headlamp (hereinafter referred to as L5), a lower left headlamp (hereinafter referred to as L6), a left-right headlamp (hereinafter referred to as L7), and a left-left headlamp (hereinafter referred to as L8). The lighting of L1 to L8 is controlled individually. The multi-stage light distribution beyond two-stage is realized by appropriately controlling the increase/decrease of the lighting light quantity. Note that "left", "right" (or right side and left side) herein refer to the left and the right when facing in an advancing direction of the vehicle unless particularly stated.

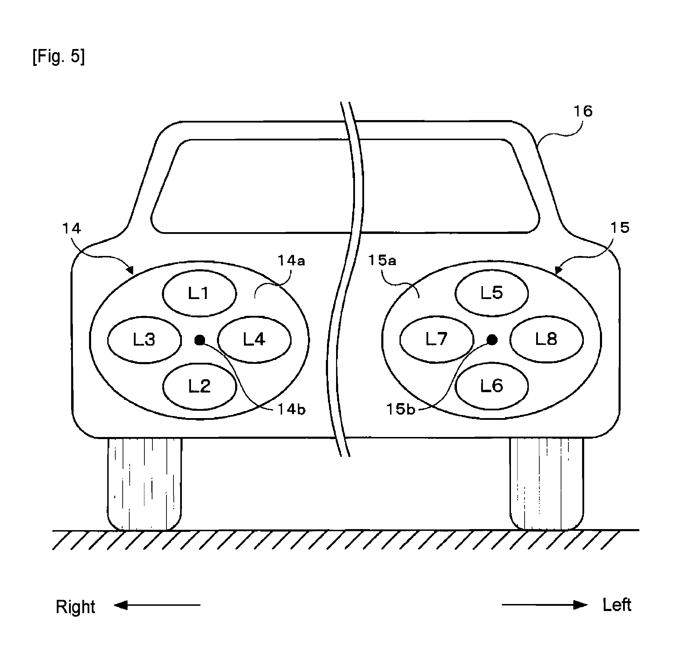

FIG. 5 is a view showing the position of each headlamp (L1 to L8) in the vehicle. In the figure, the right headlamp part 14 is attached on the right side at a front of a vehicle 16 (left side when facing the drawing), and the left headlamp part 15 is attached on the left side at the front of the vehicle 16 (right side when facing the drawing).

In the right headlamp part 14 and the left headlamp part 15, L1 and L5 are attached at positions slightly shifted to an upper side from centers 14b, 15b of each reflector 14a, 15b. Similarly, L2 and L6 are attached at positions slightly shifted to a lower side, L3 and L7 are attached at positions slightly shifted to the right side, and L4 and L8 are attached at positions slightly shifted to the left side.

Therefore, an optical axis is directed downward when the L1 or the L2 is turned on, the optical axis is directed upward when the L2 or the L6 is turned on, the optical axis is directed leftward when L3 or L7 is turned on, and the optical axis is directed rightward when L4 or L8 is turned on, and thus a multi-stage light distribution control beyond the two-stage can be carried out in cooperation with the control of increase/decrease of the lighting light quantity since the beam can be directed to the left and the right in addition to the low beam (downward) and the high beam (upward) by individually controlling the lighting of L1 to L8.

A phosphor used in L1 to L8 may be a normal tungsten lamp or a halogen lamp, but a lamp of high intensity and single light emission color such as an HID (High Intensity Discharge) bulb and a high intensity LED is preferably desired. In particular, the high intensity LED is the most preferred selection since it has a long lifespan and small heat generation compared to other lamps, and furthermore, the light quantity can be easily increased/decreased by simply changing the drive current.

Returning again to FIG. 1, a combination switch 3 is a so-called light ON/OFF switch, and is operated by a driver intending to light the headlamp (headlamp unit 9) at night or early night, or under a low illuminance environment such as in a tunnel. The headlamp immediately turns on when the combination switch 3 is operated, and the beam light distribution of the headlamp is switched according to the operation position. A headlamp auto switch 4 is similar to the combination switch 3 in that it is also operated based on an intention of the driver, but differs from the combination switch 3 in that the headlamp is not immediately turned on at the point the headlamp auto switch 4 is operated, and the lighting and the light distribution control (the multi-stage light distribution control) is carried out when a predetermined condition is satisfied.

The rudder angle sensor 5 is a sensor for detecting the phase rudder angle of a steering handle, and the output of the rudder angle sensor 5 is used in a corner detection process, to be hereinafter described.

The lighting state display unit 6 notifies the operation state of the headlamp unit 9 (e.g., information indicating the lighting/non-lighting of each L1 to L8 and the illuminance information thereof) to the driver. This notification may include information indicating abnormality (abnormal temperature or the like) of the headlamp unit 9.

The control unit 7 may be configured with a microprocessor (i.e., computer) of a program control method as a main body or may be configured with all or a majority of logical elements configured with hard logic. For convenience of description, if configured by a computer, the control unit 7 executes manual lighting control (based on operation of the combination switch 3) or automatic lighting control (based on the operation of the headlamp auto switch 4) of the headlamp unit 9 by executing the control program, to be hereinafter described.

The illuminance adjustment unit 8 individually controls the lighting of L1 to L8 of the headlamp unit 9 according to the manual lighting control instruction or the automatic lighting control instruction from the control unit 7, and controls the increase/decrease of the lighting light quantity as necessary.

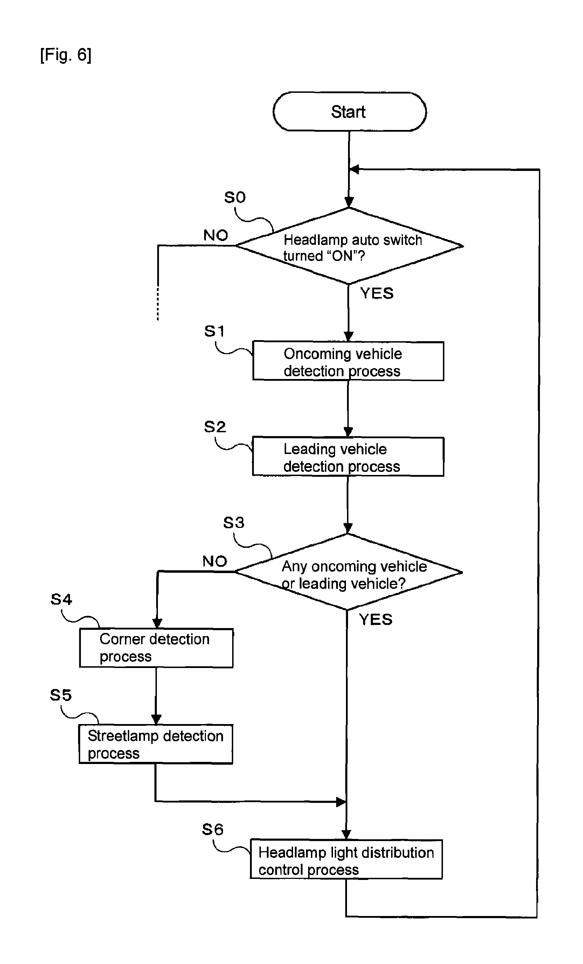

FIG. 6 is a view showing a schematic flow of main parts of the control program executed by the control unit 7. In this flow, whether or not the headlamp auto switch 4 is turned "ON" is determined (step S0), and the manual lighting control (not shown) is executed if not turned "ON".

If the headlamp auto switch 4 is turned "ON", an oncoming vehicle detection process and a leading vehicle detection process (step S1, step S2) are executed, and a presence of the oncoming vehicle or the leading vehicle is determined (step S3). If determined that the oncoming vehicle or the leading vehicle is "not present", a corner detection process (step S4) and a streetlamp detection process (step S5) are executed, and then a headlamp light distribution control process is executed (step S6). If determined that the oncoming vehicle or the leading vehicle is "present", the headlamp light distribution control process is executed (step S6), and then in either case, the process returns to step S0. Although only the "leading vehicle" and the "oncoming vehicle " are detected herein as other vehicles other than the own vehicle, the vehicle immediately after overtaking the own vehicle (i.e., overtaking vehicle) may be assumed as the "leading vehicle" from a relationship relative to the own vehicle, and thus the "leading vehicle" also includes the meaning of "overtaking vehicle" in the present embodiment.

The specific description of the oncoming vehicle detection process, the leading vehicle detection process, the corner detection process, and the streetlamp detection process will be hereinafter described.

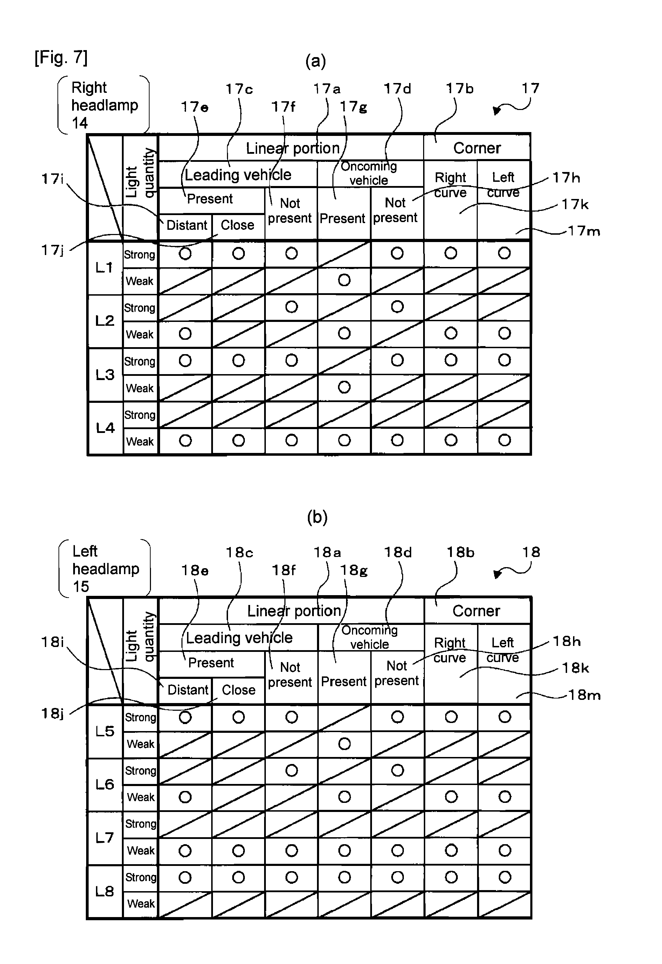

FIG. 7A and 7B are views each showing a control mode of the headlamp light distribution control process, where FIG. 7A is a control mode 17 related to the right headlamp part 14, and FIG. 7B is a control mode 18 related to the left headlamp part 15. The two control modes 17, 18 are respectively divided to a linear portion 17a, 18a and a corner 17b, 18b. The linear portion 17a, 18a is further divided into a leading vehicle 17c, 18c and an oncoming vehicle 17d, 18d, the leading vehicle 17c, 18c is divided to present 17e, 18e and not present 17f, 18f, the oncoming vehicle 17d, 18d is divided to present 17g, 18g and not present 17h, 18h, and the present 17e, 18e of the leading vehicle 17c, 18c is divided to distant 17i, 18i and close 17j, 18j. The corner 17b, 18b is divided to a right curve 17k, 18k and a left curve 17m, 18m.

The "corner" in the two control modes 17, 18 refers to the bent path (also referred to as curve) of the travel road surface, and specifically, when the corner traveling is detected in the corner detection process (step S4) of FIG. 6. Therefore, the "linear portion" in the two control modes 17, 18 refers to the travel road surface other than the corner, and specifically, when the corner traveling is not detected (i.e., linear path traveling) in the corner detection process (step S4) of FIG. 6.

The corner detection can be carried out using the output of the rudder angle sensor 5. That is, detection is made as the corner traveling when the driver turns the steering handle. Alternatively, a white line of the road surface may be extracted from the image of the imaging unit 2, and the corner may be detected from the bent manner of the white line. The idea of the present invention may use either one or may use another method (e.g., traveling path prediction using car navigation system) to detect the corner.

Regarding the "leading vehicle" and the "oncoming vehicle" in the two control modes 17, 18, the vehicle traveling in front of the own vehicle and in the same direction as the own vehicle is the leading vehicle, and the vehicle traveling towards the own vehicle is the oncoming vehicle. The "leading vehicle" and the "oncoming vehicle" are detected in the oncoming vehicle detection process (step S1) and the leading vehicle detection process (step S2) of FIG. 6, where "present" of the leading vehicle and the oncoming vehicle shows a case detected in the relevant process, and "not present" shows a case not detected in the process. "Distant" and "close" in the presence of the leading vehicle refers to a magnitude of an inter-vehicle distance from the leading vehicle to the own vehicle.

The headlamp light distribution control process using the two control modes 17, 18 is as follows.

### <No oncoming vehicle and leading vehicle>

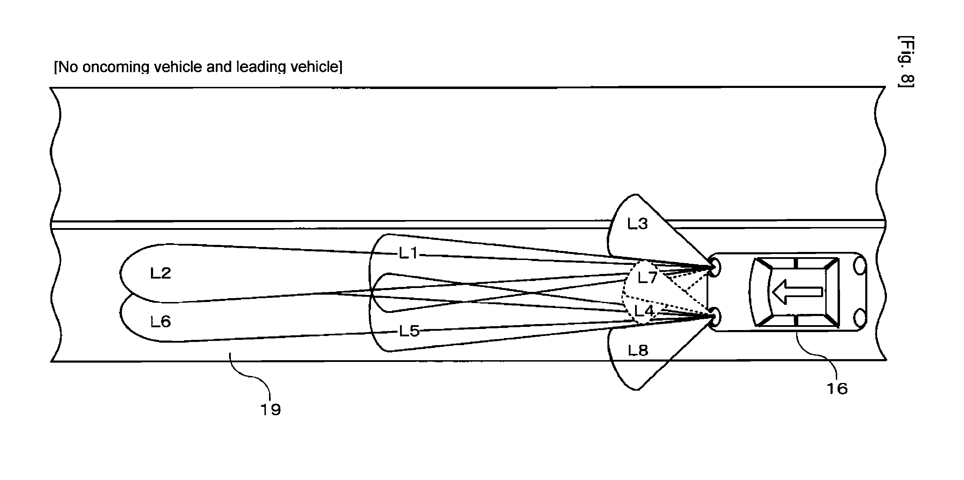

FIG. 8 shows a headlamp light distribution state diagram of when the oncoming vehicle and the leading vehicle are not present. As shown in the figure, only the own vehicle 16 is traveling on a road 19, which road 19 is a straight road and not arranged with streetlamps. In such case, the light quantity of L1 of the right headlamp 14 is assumed as strong, the light quantity of L2 as strong, the light quantity of L3 as strong, light quantity of L4 as weak, the light quantity of L5 of the left headlamp 15 as strong, the light quantity of L6 as strong, the light quantity of L7 as weak, and the light quantity of L8 as strong from the two control modes 17, 18. In the figure, fan-shaped figures show the light distribution of L1 to L8, the fan of solid line showing strong light quantity, and the fan of broken line showing weak light quantity. The reaching distance of the light is expressed by the length from the base of the fan to the circular arc. Thus, if the oncoming vehicle and the leading vehicle are not present while traveling on the straight road without streetlamps, the long distance to the front of the own vehicle 16 can be illuminated by the high beam (L2 and L6) of strong light quantity, and the middle/close distance to the front of the own vehicle 16 can be illuminated by the low beam (L1 and L5) of strong light quantity, and furthermore, both sides to the front of the own vehicle 16 are illuminated by the outward side beam (L3 and L8) of strong light quantity, and immediately close to the front of the own vehicle 16 is illuminated with the inward side beam (L4 and L7) of weak light quantity.
Therefore, a wide range from a sufficiently long distance to the middle/close distance in the advancing direction of the own vehicle 16 can be brightly illuminated, the sides to the front and immediately close to the own vehicle 16 can be brightly illuminated, whereby the vision of the driver can be satisfactorily ensured under the environment of low illuminance.

### <Leading vehicle is present (distant)>

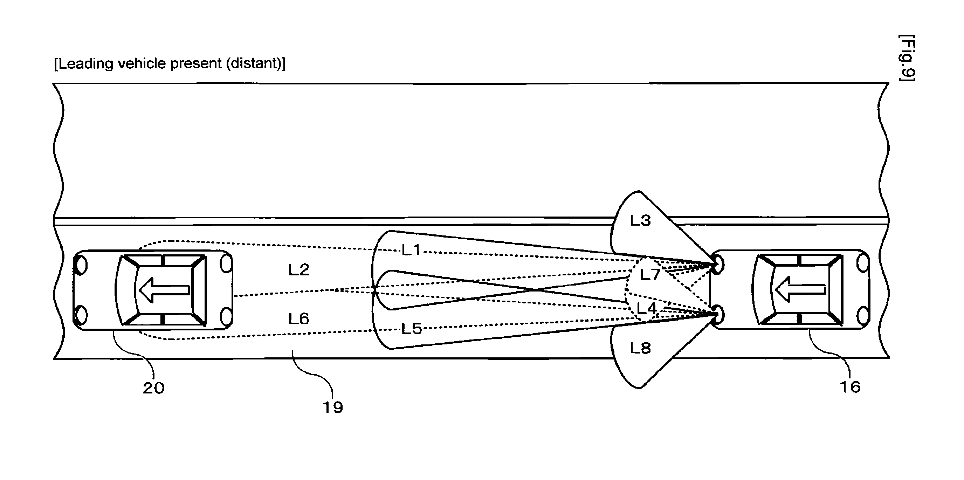

FIG. 9 shows a headlamp light distribution state diagram of when a distant leading vehicle is present. As shown in the figure, a leading vehicle 20 traveling in the same direction is present at a distant in front of the own vehicle 16 traveling on the road 19. The road 19 is a straight road not arranged with streetlamps. In such case, the light quantity of L1 of the right headlamp 14 is assumed as strong, the light quantity of L2 as weak, the light quantity of L3 as strong, light quantity of L4 as weak, the light quantity of L5 of the left headlamp 15 as strong, the light quantity of L6 as weak, the light quantity of L7 as weak, and the light quantity of L8 as strong from the two control modes 17, 18.
Similar to the above, in the figure, the fan-shaped figures show the light distribution of L1 to L8, the fan of solid line showing strong light quantity, and the fan of broken line showing weak light quantity. The reaching distance of the light is expressed by the length from the base of the fan to the circular arc. Thus, if the leading vehicle 20 is present at a distant in front of the own vehicle 16 while traveling on the straight road without streetlamps, the long distance to the front of the own vehicle 16 can be illuminated at a brightness that does not dazzle the leading vehicle 20 at a distant by the high beam (L2 and L6) of weak light quantity, and the middle/close distance to the front of the own vehicle 16 can be illuminated by the low beam (L1 and L5) of strong light quantity, and furthermore, both sides to the front of the own vehicle 16 are illuminated by the outward side beam (L3 and L8) of strong light quantity, and immediately close to the front of the own vehicle 16 is illuminated with the inward side beam (L4 and L7) of weak light quantity.
Therefore, a wide range from a sufficiently long distance to the middle/close distance in the advancing direction of the own vehicle 16 can be sufficiently illuminated while taking the distant leading vehicle 20 into consideration, and the sides to the front and immediately close to the own vehicle 16 can be brightly illuminated, whereby the vision of the driver can be satisfactorily ensured under the environment of low illuminance.

### <Leading vehicle is present (close)>

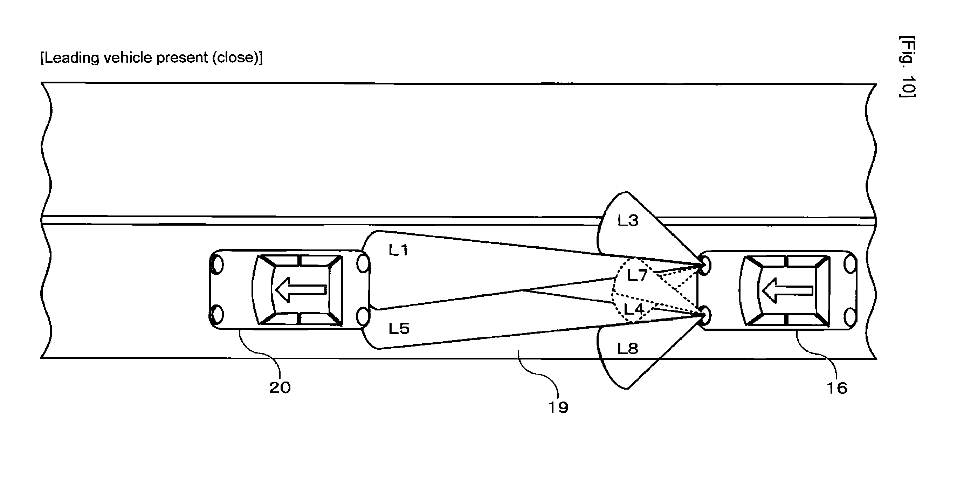

FIG. 10 shows a headlamp light distribution state diagram of when the close leading vehicle is present. As shown in the figure, the leading vehicle 20 traveling in the same direction is present close in front of the own vehicle 16 traveling on the road 19. The road 19 is a straight road not arranged with streetlamps. In such case, the light quantity of L1 of the right headlamp 14 is assumed as strong, L2 is turned OFF, the light quantity of L3 as strong, light quantity of L4 as weak, the light quantity of L5 of the left headlamp 15 as strong, L6 is turned OFF, the light quantity of L7 as weak, and the light quantity of L8 as strong from the two control modes 17, 18. Similar to the above, in the figure, the fan-shaped figures show the light distribution of L1 to L8, the fan of solid line showing strong light quantity, and the fan of broken line showing weak light quantity. The reaching distance of the light is expressed by the length from the base of the fan to the circular arc. Thus, if the leading vehicle 20 is present at a close distance in front of the own vehicle 16 while traveling on the straight road without streetlamps, the close leading vehicle 20 will not be dazzled as the high beam (L2 and L6) is turned OFF, and the middle/close distance to the front of the own vehicle 16 can be illuminated by the low beam (L1 and L5) of strong light quantity, and furthermore, both sides to the front of the own vehicle 16 are illuminated by the outward side beam (L3 and L8) of strong light quantity, and immediately close to the front of the own vehicle 16 is illuminated with the inward side beam (L4 and L7) of weak light quantity.
Therefore, a wide range from a sufficiently long distance to the middle/close distance in the advancing direction of the own vehicle 16 can be sufficiently illuminated while taking the close leading vehicle 20 into consideration, and the sides to the front and immediately close to the own vehicle 16 can be brightly illuminated, whereby the vision of the driver can be satisfactorily ensured under the environment of low illuminance. Note that if the leading vehicle 20 becomes closer to the own vehicle 16, it is preferable to weaken the light quantity of the low beam (L1 and L5). This is because if the inter-vehicle distance is short, the leading vehicle 20 may be dazzled if the low beam (L1 and L5) remained at strong light quantity.

### <Oncoming vehicle is present>

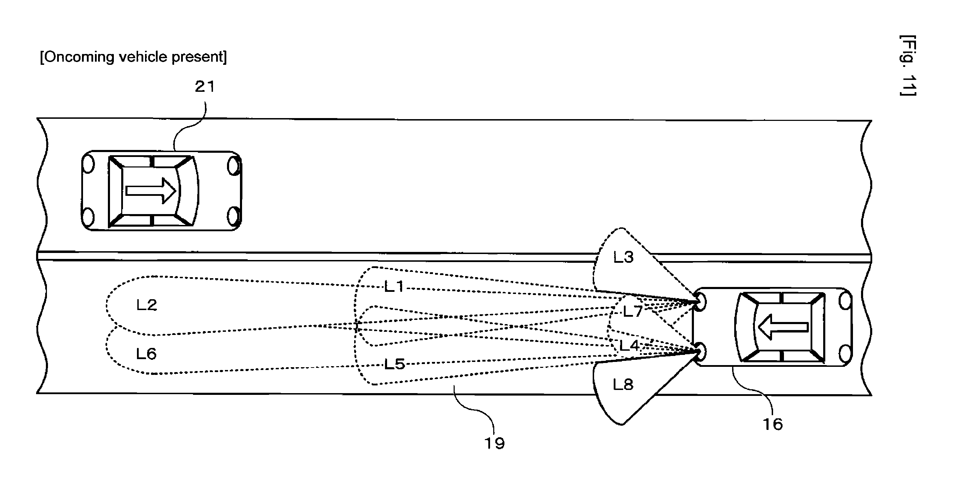

FIG. 11 shows a headlamp light distribution state diagram of when the oncoming vehicle is present. As shown in the figure, an oncoming vehicle 21 traveling towards the own vehicle 16 is present on the oncoming lane of the own vehicle 16 traveling on the road 19. The road 19 is a straight road not arranged with streetlamps. In such case, the light quantity of L1 of the right headlamp 14 is assumed as weak, the light quantity of L2 as weak, the light quantity of L3 as weak, the light quantity of L4 as weak, the light quantity of L5 of the left headlamp 15 as weak, the light quantity of L6 as weak, the light quantity of L7 as weak, and the light quantity of L8 as strong from the two control modes 17, 18. Similar to the above, in the figure, the fan-shaped figures show the light distribution of L1 to L8, the fan of solid line showing strong light quantity, and the fan of broken line showing weak light quantity. The reaching distance of the light is expressed by the length from the base of the fan to the circular arc.

Thus, if the oncoming vehicle 21 is present while traveling on the straight road without streetlamps, the long distance to the front of the vehicle 16 can be illuminated by the high beam (L2 and L6) of weak light quantity, and the middle/close distance to the front of the own vehicle 16 can be illuminated by the low beam (L1 and L5) of weak light quantity, and furthermore, the right side to the front of the own vehicle 16 is weakly illuminated by the right outward side beam (L3) of weak light quantity, the left side to the front of the own vehicle 16 is strongly illuminated by the left outward side beam (L8) of strong light quantity, and immediately close to the front of the own vehicle 16 is illuminated with the inward side beam (L4 and L7) of weak light quantity.
Therefore, a wide range from a sufficiently long distance to the middle/close distance in the advancing direction of the own vehicle 16 can be sufficiently illuminated, and the sides to the front and immediately close to the own vehicle 16 can be illuminated while taking the oncoming vehicle 21 into consideration since the light quantities of the high beam (L2 and L6) and the low beam (L1 and L5) as well as the right outward side beam (L3) are weak, whereby the vision of the driver can be satisfactorily ensured under the environment of low illuminance. Note that if the oncoming vehicle 22 becomes closer to the own vehicle 16, the light quantity of the right outward side beam (L3) may further be reduced or turned OFF. The dazzling on the oncoming vehicle 21 when passing by is thus reliably prevented.

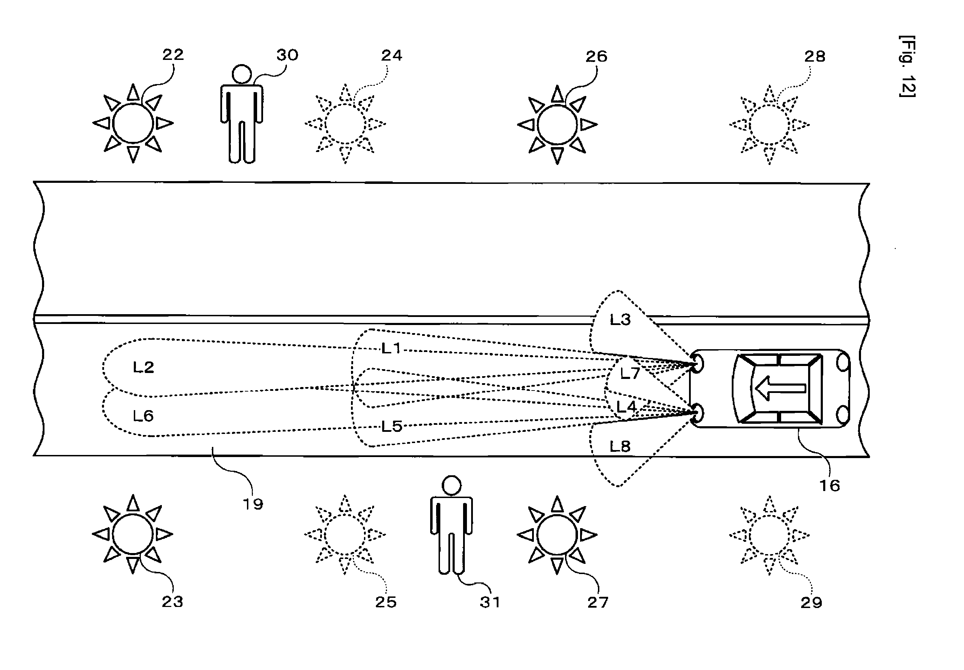

<With streetlamps> FIG. 12 shows a headlamp light distribution state diagram of when streetlamps are present. As shown in the figure, no leading vehicle and oncoming vehicle are present in front of the own vehicle 16 traveling on the road 19 arranged with the streetlamps 22 to 29. The road 19 is a straight road, the streetlamps 22, 23, 26, and 27 are mercury lamps, and the streetlamps 24, 25, 28, and 29 are sodium lamps. In such case, the light quantity of all L1 to L8 is made weak, although not shown in the two control modes 17, 18. Similar to the above, in the figure, the fan-shaped figures show the light distribution of L1 to L8, the fan of solid line showing strong light quantity, and the fan of broken line showing weak light quantity. The reaching distance of the light is expressed by the length from the base of the fan to the circular arc. Thus, while traveling on the straight road with streetlamps, a wide range from sufficiently long distance to the middle/close distance in the advancing direction of the own vehicle 16 can be illuminated with sufficient brightness in view of the illuminance of the streetlamps 22 to 29 by the high beam (L2 and L6), the low beam (L1 and L5), the outward side beam (L3 and L8), and the inward side beam (L4 and L7), all having weak light quantity.
Therefore, the pedestrians 30, 31 walking on the sidewalk of the road 19 will not be dazzled.

Next, the detection of the oncoming vehicle and the leading vehicle as well as the detection of the streetlamp will be specifically described below.

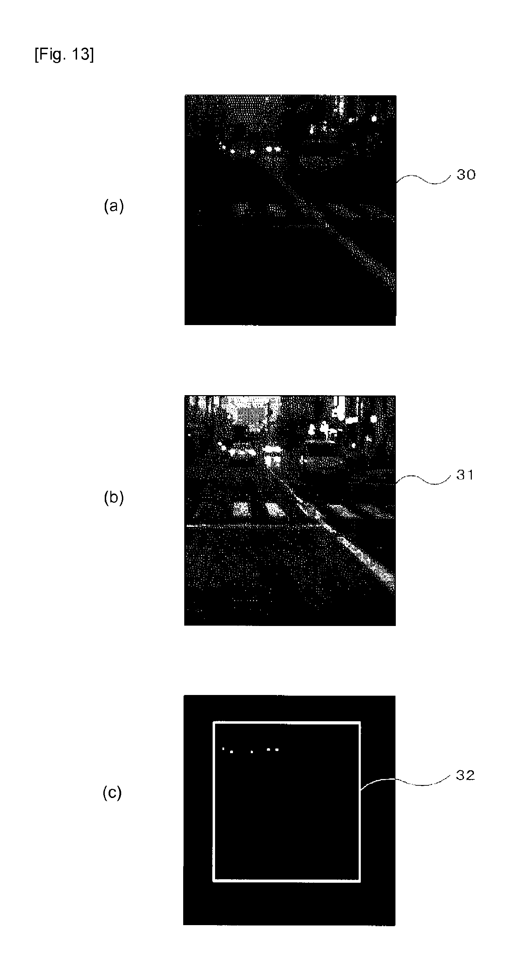

FIGS. 13A to 13C are views showing an output image of the imaging unit 2. FIG. 13A is a raw output image (hereinafter referred to as RAW image 30). The RAW image 30 photographed under the low illuminance environment is entirely at black level, and the portion of white level or intermediate tone level is mainly the illumination light of the streetlamp, the headlight of the oncoming vehicle, the taillight of the leading vehicle or the like. If the dynamic range of the imaging device 10 used in the imaging unit 2 is sufficiently large, the illumination light can be extracted from the portion of white level or intermediate tone level. That is, using the RAW image 30 as is of FIG. 13A, or using a stretched image 31 in which the RAW image 30 is more clearly seen as in FIG. 13B; an area 32 showing red frame as shown in FIG. 13C is set from an intensity average value of the entire screen of the RAW image or the stretched image 31, the average value of the area 32 is calculated, an assembly of pixels showing an intensity value or about two to three times a standard deviation (σ) is specified, and a pixel assembly can be judged and extracted as the illumination light of the streetlamp, the headlight of the oncoming vehicle, the taillight of the leading vehicle and the like.

Therefore, although the pixel assembly corresponding to the illumination light can be extracted from the output image of the imaging unit 2, whether the illumination light is the streetlamp, the headlight of the oncoming vehicle, or the taillight of the leading vehicle cannot be identified at this stage. Only the fact that it is the illumination light is known. Unless identification is made, the two control modes 17, 18 (see FIG. 7) cannot be used, and thus some form of devisal is necessary.

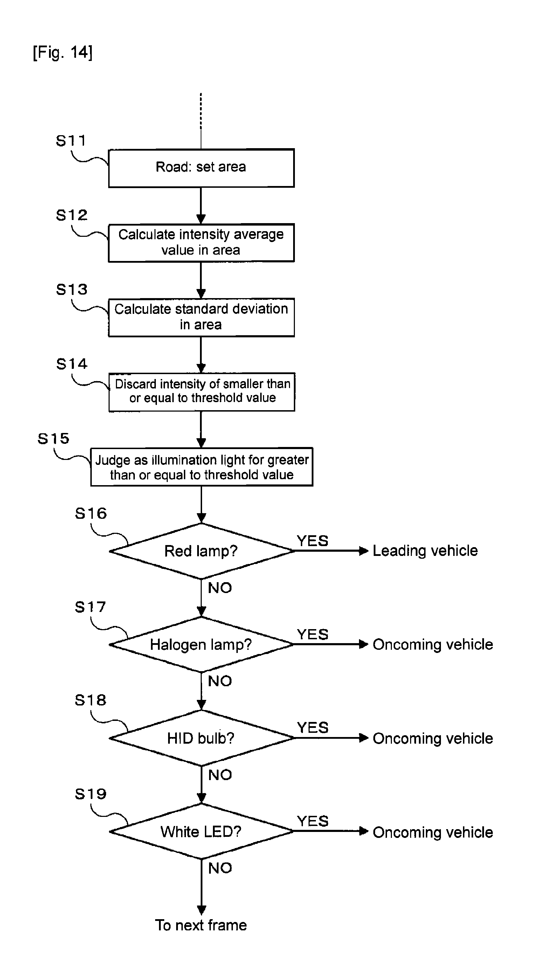

The method of identifying the illumination light according to the present embodiment is as described below. <Identification of taillight and headlight> FIG. 14 is a view showing a flow for identifying the taillight and the headlight. In this flow, an area of the road is first set from the output image of the imaging unit 2 (step S11), and then the intensity average value of the area is calculated (step S12). The standard deviation of the area is then calculated (step S13), the intensity of smaller than or equal to a predetermined threshold value is discarded (step S14), and an assembly of pixels having an intensity value of greater than or equal to the threshold value is judged as illumination light (step S15). The color of the assembly of the pixels is then examined, where the illumination light is judged as the taillight of the leading vehicle if red ("YES" in step S16), the illumination light is judged as the headlight of the oncoming vehicle if a light emission color corresponding to the light emission wavelength of the halogen lamp ("YES" in step S17), the illumination light is judged as the headlight of the oncoming vehicle if a light emission color corresponding to the light emission wavelength of the HID bulb ("YES" in step S18), or the illumination light is judged as the headlight of the oncoming vehicle if a light emission color corresponding to the light emission wavelength of the LED ("YES" in step S19), where the process proceeds to the process of the next frame in any case.

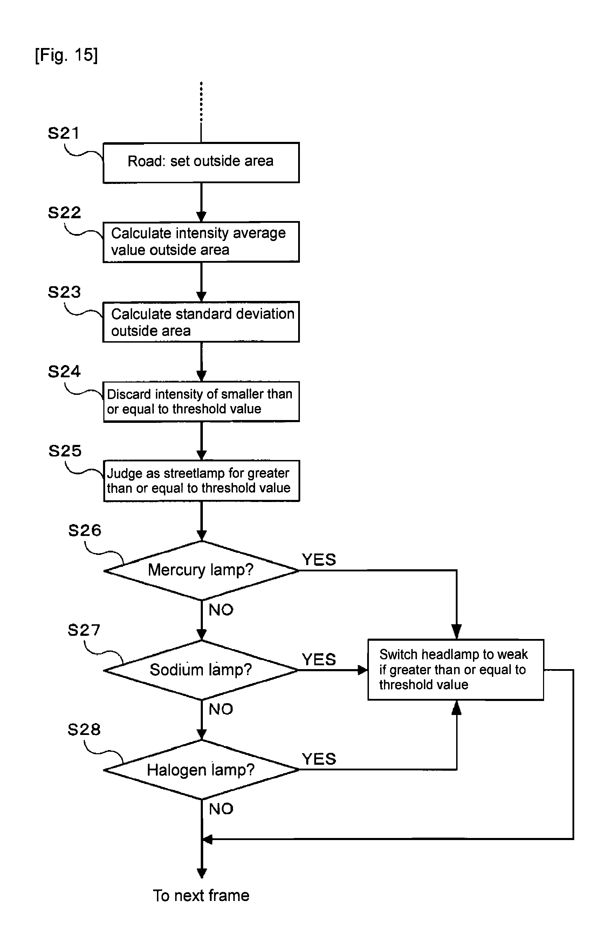

<Identification of streetlamp> FIG. 15 is a view showing a flow for identifying the streetlamp. In this flow, an area of the road is first set from the output image of the imaging unit 2 (step S21), and then the intensity average value of the area is calculated (step S22). The standard deviation of the area is then calculated (step S23), the intensity of smaller than or equal to a predetermined threshold value is discarded (step S24), and an assembly of pixels having an intensity value of greater than or equal to the threshold value is judged as the illumination light (step S25).
The color of the assembly of the pixels is then examined, where the illumination light is judged as the streetlamp using mercury lamp if a light emission color corresponding to the light emission wavelength of the mercury lamp ("YES" in step S26), the illumination light is judged as the streetlamp using sodium lamp if a light emission color corresponding to the light emission wavelength of the sodium lamp ("YES" in step S27), the illumination light is judged as the streetlamp using halogen lamp if a light emission color corresponding to the light emission wavelength of the halogen lamp ("YES" in step S28), where the process proceeds to the process of the next frame after weakening the light quantity of L1 to L8 as shown in FIG. 8 when the intensity of the illumination light is greater than or equal to the threshold value in any case.

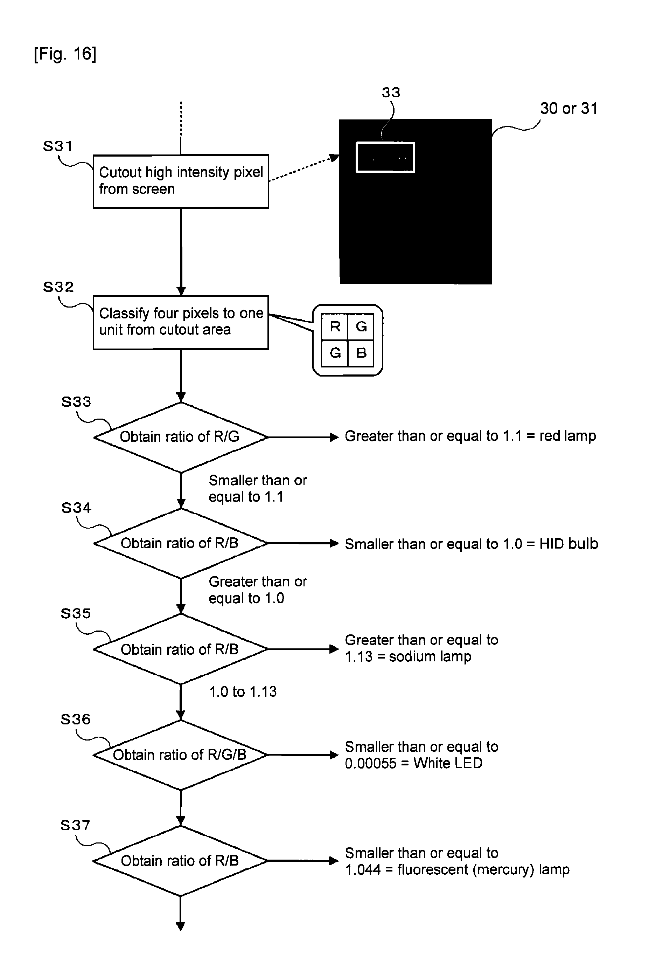

<Specific example of identification judgment of the illumination light> FIG. 16 is a view showing a flow of a specific example of the identification judgment of the illumination light. In the flow, the high intensity pixel is first cutout from the output image of the imaging unit 2 (e.g., RAW image 30 or stretched image 31 of FIG. 13) (step S31). A rectangular frame line is a cutout area 33, and white points in the area 33 represent the high intensity pixel (or assembly of pixels).

The pixels in the area 33 are classified into units of four pixels of two pixels vertically and horizontally (step S32). This classification means specifying the 2 x 2 pixels of RGGB shown with a heavy frame in FIG. 4. The ratio (R/G) of the pixel values of R and G of the classified four pixels is then obtained (step S33). If the R/G is large, the classified four pixels can be assumed as a collection of mainly red pixels, in which case, determination can be made as the red illumination light (e.g., taillight of leading vehicle) if R/G exceeds 1.1.

If R/G is smaller than or equal to 1.1, the ratio (R/B) of the pixel values of R and B of the classified four pixels is obtained (step S34). If the R/B is small, the classified four pixels can be assumed as a collection of mainly blue pixels, in which case, determination can be made as the blue illumination light (e.g., headlamp of oncoming vehicle using HID bulb) if R/B is smaller than or equal to 1.0.

If R/B is greater than or equal to 1.0, the ratio (R/B) of the pixel values of R and B of the classified four pixels is obtained (step S35). The classified four pixels can be assumed as a collection of mainly orange pixels if R/B is greater than or equal to 1.13, in which case, determination can be made as the orange illumination light (e.g., streetlamp using sodium lamp).

If R/B is between 1.0 and 1.13, the ratio (R/G/B) of the pixel values of R, G and B of the classified four pixels is obtained (step S36). The classified four pixels can be assumed as a collection of mainly white pixels if R/G/B is smaller than or equal to 0.00055, in which case, determination can be made as the white illumination light (e.g., streetlamp using white LED or headlamp of oncoming vehicle).

If R/G/B is not smaller than or equal to 0.00055, the ratio (R/B) of the pixel values of R and B of the classified four pixels is obtained (step S37). The classified four pixels can be assumed as a collection of mainly light orange pixels if R/B is greater than or equal to 1.044, in which case, determination can be made as the light orange illumination light (e.g., streetlamp using halogen lamp or headlamp of oncoming vehicle).

Lastly, the classified four pixels can be assumed as a collection of mainly light green pixels if R /B is not greater than or equal to 1.044 (i.e., if R/B is smaller than or equal to 1.044), in which case, determination can be made as the light green illumination light (e.g., streetlamp using fluorescent lamp or mercury lamp).

Therefore, the illumination light can be identified from the ratio of each pixel value of RGB, where various illumination lights can emit light of a specific color corresponding to the light emission wavelength.

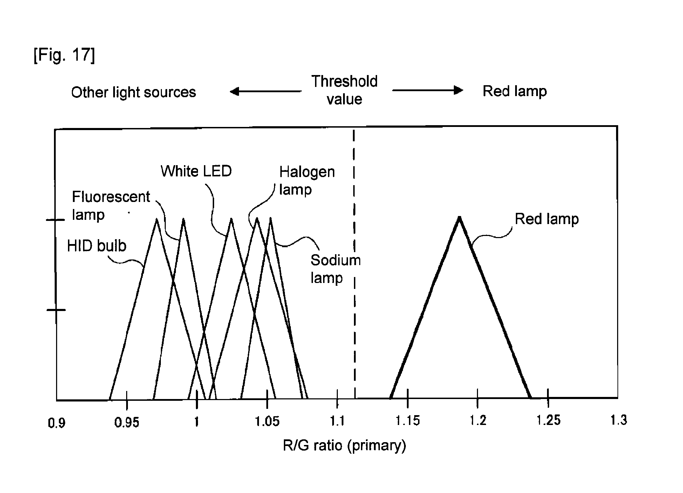

FIG. 17 shows an identification conceptual view of the red lamp such as the taillight of the leading vehicle. In the figure, the horizontal axis is the R/G ratio (primary, and the triangular figure in the figure shows the respective illumination light. Specific properties can be seen that the HID bulb, the fluorescent lamp, the white LED, the halogen lamp, and the sodium lamp are collected on the left side substantially around 1.11 of the R/G ratio as the boundary, whereas the red lamp is positioned on the right side. Therefore, the "red light" can be identified from various illumination lights by setting an appropriate threshold value corresponding to the boundary, and evaluating the R/G ratio.

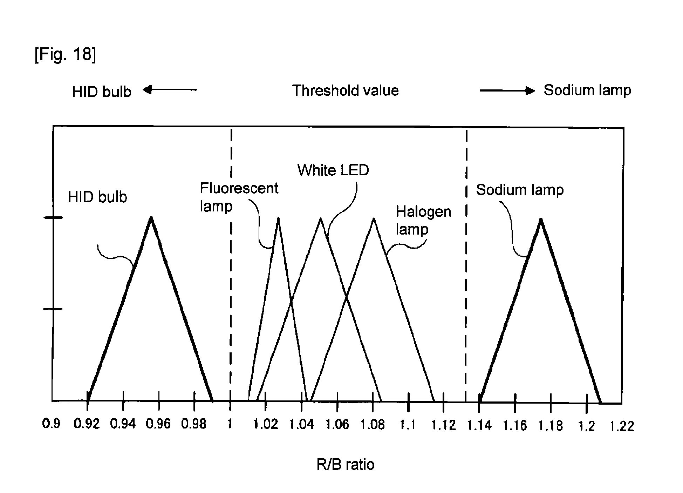

FIG. 18 shows an identification conceptual view of the HID bulb and the sodium lamp. In the figure, the horizontal axis is the R/B ratio, and the triangular figure in the figure shows the respective illumination light. Specific properties can be seen that the fluorescent lamp, the white LED, and the halogen lamp are collected between substantially 1.0 to 1.03 of the R/B ratio, whereas the HID bulb is positioned on the left side of substantially 1.0 of the R/B ratio, and the sodium lamp is positioned on the left side of substantially 1.03 of the R/B ratio. Therefore, the "HID bulb" and the "sodium lamp" can be identified from various illumination lights by setting an appropriate threshold value corresponding to the boundary (about 1.0 and 1.13), and evaluating the R/B ratio.

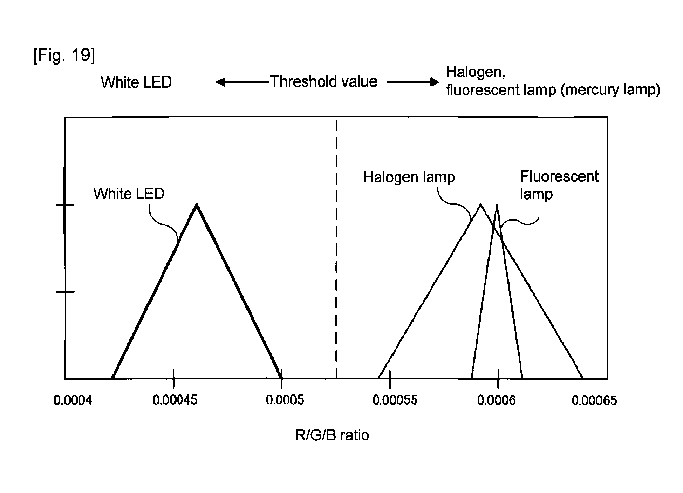

FIG. 19 shows an identification conceptual view of the white LED. In the figure, the horizontal axis is the R/G/B ratio, and the triangular figure in the figure shows the respective illumination light. Specific properties can be seen that the halogen lamp and fluorescent lamp are collected on the right side with substantially 0.00053 of the R/G/B ratio as the boundary, where the white LED is positioned on the left side of the boundary. Therefore, the "white LED" can be identified from various illumination lights by setting an appropriate threshold value corresponding to the boundary (about 0.00053), and evaluating the R/G/B ratio.

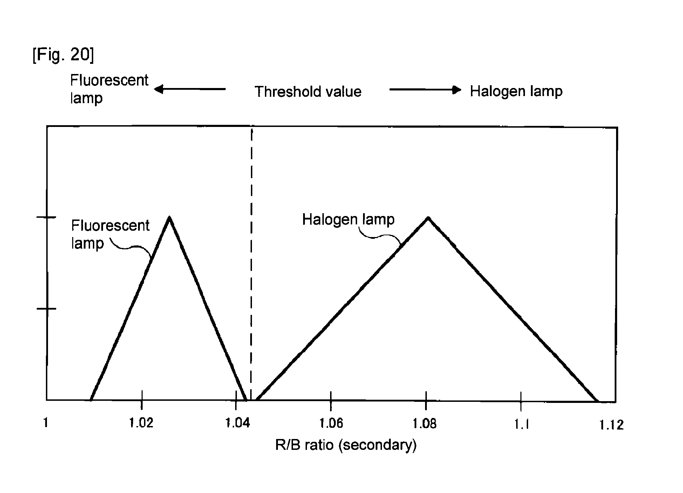

FIG. 20 shows an identification conceptual view of the fluorescent lamp and the halogen lamp. In the figure, the horizontal axis is the R/B ratio (secondary), and the triangular figure in the figure shows the respective illumination light. Specific properties can be seen that the fluorescent lamp and the halogen lamp are positioned on the right side and the left side with substantially 1.041 of the R/B ratio as the boundary. Therefore, the "fluorescent lamp" and the "halogen lamp" can be identified by setting an appropriate threshold value corresponding to the boundary (about 1.041), and evaluating the R/B ratio.

### [Explanation of Symbols]

- 1: headlamp light distribution control device
- 2: imaging unit (imaging means)
- 7: control unit (identification means, control means)
- 9: headlamp unit (headlamp)
- 16: vehicle
- 20: leading vehicle
- 21: oncoming vehicle
- 22 to 29: streetlamp

## Claims

**1.** A headlamp light distribution control device being **characterized by** comprising:
imaging means for imaging an image of a front side of an own vehicle;
identification means for identifying a taillight of a leading vehicle, a headlamp of an oncoming vehicle at a front of the own vehicle, or a streetlamp based on an output image of the imaging means; and
control means for controlling light distribution property and light quantity of a headlamp of the own vehicle according to an identification result of the identification means.

**2.** The headlamp light distribution control device according to claim 1,
**characterized in that** the imaging means images a color image of a front side of the own vehicle; and the identification means identifies the taillight of the leading vehicle, the headlamp of the oncoming vehicle, or the streetlamp from color information of an illumination light included in the color image.
